# EUROPÄISCHE PATENTSCHRIFT

(11) **EP 1 970 214 B1**
(45) Veröffentlichungstag und Bekanntmachung des Hinweises auf die Patenterteilung: **16.05.2012**
(21) Anmeldenummer: 08004259.1
(22) Anmeldetag: 07.03.2008
(51) Int. Cl.: B44C 1/00, B44D 5/00, B44C 5/04, C25D 11/18, C25D 11/24

(54) **Teilpigmentierung einer Deckschicht zur Vermeidung von Interferenzen bei Aluminiumbauteilen oder Aluminium aufweisenden Bauteilen**
Partial pigmentation of a cover coating for reducing interference from aluminium components or components which contain aluminium
Pigmentation partielle d'une couche de toit destinée à éviter des interférences dans des composants en aluminium ou composants comprenant de l'aluminium

(30) Priorität: 16.03.2007 DE 102007014444; 27.02.2008 DE 102008011298
(43) Veröffentlichungstag der Anmeldung: 17.09.2008
(73) Patentinhaber: Süddeutsche Aluminium Manufaktur GmbH, 89558 Böhmenkirch (DE)
(72) Erfinder:
(74) Vertreter: Grosse, Rainer

(56) Entgegenhaltungen:
- WO-A1-2004/063427
- BE-A- 664 258
- GB-A- 926 418
- US-A- 3 374 155
- US-A1- 2004 004 003

## Beschreibung

Die Erfindung betrifft ein Aluminiumbauteil oder ein Bauteil, das Aluminium aufweist und dessen Oberfläche behandelt, insbesondere mit einer oder mehreren Deckschicht(en) versehen wird.

Dokument WO 2004/063427 offenbart ein Verfahren zum Behandeln der Oberfläche von Aluminiumbauteilen mit den Schritten, anodisieren oder eloxieren, pigmentieren bzw. verfärben, bzw Interferenz verfärben, kalt- verdichten mittels einer Lösung mit Silikat- Komponenten und Nickel- Salzen und/ oder warm- verdichten durch Hydratisierung.

Dokument US 3 374 155 offenbart ein Verfahren zum Behandeln der Oberfläche von Aluminiumbauteilen mit den Schritten: anodisieren oder eloxieren, pigmentieren bzw. verfärben, verdichten mittels einer Lösung mit Silikat, zur Bildung einer dünnen keramischen Schicht, ohne lichtbrechende Pigmente.

Bei der Behandlung der Oberfläche von derartigen Bauteilen kann es zu optischen Interferenzerscheinungen kommen, die unter anderem den Eindruck einer ungleichmäßigen und daher optisch unansehnlichen Oberflächenstruktur erweckt.

Der Erfindung liegt daher die Aufgabe zugrunde, ein Verfahren zur Behandlung der Oberfläche von Aluminiumbauteilen oder Aluminium aufweisenden Bauteilen zu schaffen, die trotz Oberflächenbehandlung mittels einer und/oder mehrerer Deckschichten einen optisch einwandfreien, insbesondere interferenzfreien Eindruck machen.

Diese Aufgabe wird erfindungsgemäß dadurch gelöst, dass die Oberfläche des Aluminiumbauteils oder des Aluminium aufweisenden Bauteils zunächst eloxiert wird. Hierdurch wird eine Kamm- oder Porenstruktur auf der Oberfläche erzeugt, die nach außen hin offene Vertiefungen oder Poren aufweist. Anschließend wird in die Vertiefungen oder Poren mindestens eine pigmentierende Substanz, insbesondere vollpigmentierende Substanz, eingebracht. Alternativ oder zusätzlich erfolgt ein Einbringen von Substanzen, insbesondere Metallsubstanzen, in die Vertiefungen oder Poren insbesondere durch ein Ausscheidungsverfahren in einem Bad und anschließend eine Oxidation der Substanzen insbesondere durch Beaufschlagung mit elektrischem Strom. Die Substanzen werden dadurch in ihrer Farbe eingestellt, wobei auch "farblos" möglich ist. Danach erfolgt ein Aufbringen mindestens einer Deckschicht in Form einer silikatischen Sol-Gel-Beschichtung auf die Oberfläche, wobei die Deckschicht ein Pigment aufweist, das insbesondere der Lichtbrechung dient. Es wird also eine derartige Beschichtung verwendet, die mit einem derartigen Pigment versehen wird. Aufgrund der Pigmentierung der Vertiefungen oder Poren und/oder deren Farbgebung durch die oxidierten Substanzen und der Pigmentierung der Beschichtung treten keine optischen Interferenzen auf, sodass eine derartig behandelte Oberfläche völlig gleichmäßig erscheint.

Nach einer Weiterbildung der Erfindung ist vorgesehen, dass die Sol-Gel-Beschichtung mit einer Schichtdicke von 0,5 µm bis 5 µm aufgebracht wird. Hierdurch lassen sich besonders gute Ergebnisse erzielen.

Nach einer Weiterbildung der Erfindung ist vorgesehen, dass für das in der Sol-Gel-Beschichtung vorhandene Pigment ein anorganisches Pigment verwendet wird. Die in die Vertiefungen oder Poren einzubringende pigmentierende Substanz kann ein Pigment aufweisen, das ebenfalls anorganisch ist.

Ferner ist es vorteilhaft, wenn die Porenstruktur als Feinporenstruktur ausgebildet wird.

Nach einer Weiterbildung der Erfindung ist vorgesehen, dass eine pigmentierende Substanz und/oder ein Pigment mit einer beliebigen oder jeweils mit einer beliebigen Farbe, insbesondere transparenten Klarsichtfarbe, verwendet wird. Demzufolge lassen sich für die pigmentierende Substanz und/oder das Pigment beliebige unterschieldliche oder auch gleiche Farben, insbesondere auch farblose Pigmente verwenden.

Die Erfindung betrifft ferner ein Bauteil aus Aluminium oder Aluminium aufweisend, hergestellt nach dem Verfahren gemäß vorstehender Ausführungen.

Die Erfindung betrifft ein Aluminiumbauteil oder ein Bauteil, das Aluminium aufweist. Die Oberfläche des Bauteils wird eloxiert beziehungsweise anodisiert, d.h., auf der Oberfläche wird eine Oxydschicht ausgebildet. Dieser Vorgang wird insbesondere so lange durchgeführt, dass sich eine Kamm- beziehungsweise Porenstruktur auf der Oberfläche des Bauteils (mikroskopisch betrachtet) ausbildet. Die Kamm- beziehungsweise Porenstruktur ist nicht geschlossen, sondern nach oben hin offen ausgeführt. Zur Farbgestaltung kann in die Vertiefungen dieser Kamm- beziehungsweise Porenstruktur, insbesondere Feinporenstruktur, mindestens eine pigmentierte Substanz eingebracht werden. Als Pigment-Farbe kommt jede beliebige Farbe, jedoch auch eine transparente Farbe, also eine Klarsichtfarbe, in Frage. Alternativ oder zusätzlich kann zur Farbgestaltung der Vertiefungen dieser Kamm- beziehungsweise Porenstruktur, insbesondere Feinporenstruktur, durch Ausscheidungsverfahren und Verfahren der Oxidation, insbesondere durch elektrischen Strom, je nach eingesetztem Ausscheidungsprodukt, insbesondere Metallsubstanzen, eine Farbe oder ein Farbspektrum an der Oberfläche eingestellt werden. Alternativ oder zusätzlich zu einer farbigen Gestaltung ist auch eine transparente Farbe denkbar. Anschließend wird eine silikatische Sol-Gel-Beschichtung auf die eloxierte Oberfläche aufgebracht, wobei die Sol-Gel-Beschichtung vor oder während des Beschichtungsvorgangs mit einem geringen Volumenanteil von 0,1 bis 0,01 eines vorzugsweise anorganischen Pigments versehen wird. Durch die Zugabe dieses Pigments, das ebenfalls in jeder beliebigen Farbe oder auch klarsichtig ausgebildet sein kann, wird eine Interferenzbildung verhindert, d.h., die verschiedenen Schichten auf dem Bauteil führen nicht zu optischen Interferenzeffekten. Die Sol-Gel-Beschichtung wird durch Temperaturbeaufschlagung ausgehärtet.

Die Schichtdicke der silikatischen Sol-Gel-Beschichtung beträgt vorzugsweise 0,5 µm bis 5 µm.

Vor dem Aufbringen der Sol-Gel-Beschichtung und/oder vor oder nach dem Einbringen der pigmentierten Substanz und/oder der oxidationsfähigen Substanzen zur Farbgebung in die Poren kann optional auch ein Verdichten erfolgen, sodass sich die Poren im oberen Bereich verengen, jedoch nicht verschließen. Das Verdichten kann insbesondere durch Hydratisieren erfolgen.

## Patentansprüche

1. Verfahren zum Behandeln der Oberfläche von Aluminiumbauteilen oder Aluminium aufweisenden Bauteilen, mit folgenden Schritten:
- Eloxieren der Oberfläche,
- Einbringen von mindestens einer pigmentierenden Substanz, insbesondere vollpigmentierenden Substanz, in zur Oberfläche offene Vertiefungen oder Poren einer durch das Eloxieren entstandenen Kamm- oder Porenstruktur der Oberfläche, und/oder
- Einbringen von oxidationsfähigen Substanzen in zur Oberfläche offene Vertiefungen oder Poren einer durch das Eloxieren entstandene Kamm- oder Porenstruktur der Oberfläche und Oxidieren dieser Substanzen,
- Aufbringen einer silikatischen Sol-Gel-Beschichtung auf die Oberfläche, wobei die Sol-Gel-Beschichtung ein insbesondere der Lichtbrechung dienendes Pigment aufweist.

2. Verfahren nach Anspruch 1, **dadurch gekennzeichnet, dass** die Sol-Gel-Beschichtung mit einer Schichtdicke von 0,5 µm bis 5 µm aufgebracht wird.

3. Verfahren nach einem der vorhergehenden Ansprüche, **dadurch gekennzeichnet, dass** für das in der Sol-Gel-Beschichtung vorhandene Pigment ein anorganisches Pigment verwendet wird.

4. Verfahren nach einem der vorhergehenden Ansprüche, **dadurch gekennzeichnet, dass** die Porenstruktur als Feinporenstruktur ausgebildet wird.

5. Verfahren nach einem der vorhergehenden Ansprüche, **dadurch gekennzeichnet, dass** eine pigmentierende Substanz und/oder ein Pigment mit einer beliebigen oder jeweils mit einer beliebigen Farbe, insbesondere transparenten Klarsichtfarbe, verwendet wird.

6. Verfahren nach einem der vorhergehenden Ansprüche, **dadurch gekennzeichnet, dass** vor dem Aufbringen der Sol-Gel-Beschichtung eine Verdichtung, insbesondere durch Hydratisierung, der Kamm- beziehungsweise Porenstruktur erfolgt.

7. Bauteil aus Aluminium oder Aluminium aufweisend, hergestellt nach dem Verfahren gemäß einem oder mehreren der vorhergehenden Ansprüche.

## Claims

1. A method for treating the surface of aluminum components or components comprising aluminum, the method comprising the following steps:
- anodizing the surface;
- introducing at least one pigmenting substance, particularly a fully pigmenting substance, into depressions or pores open toward the surface of a comb or pore structure of the surface created by the anodizing process, and/or
- introducing oxidizable substances into depressions or pores open toward the surface of a comb or pore structure of the surface created by the anodizing process and oxidizing these substances,
- applying a siliceous sol-gel coating onto the surface, the sol-gel coating comprising a pigment particularly serving refraction purposes.

2. The method according to claim 1, **characterized in that** the sol-gel coating is applied in a layer thickness of 0.5 µm to 5 µm.

3. The method according to one of the preceding claims, **characterized in that** the pigment of the sol-gel coating is an inorganic pigment.

4. The method according to one of the preceding claims, **characterized in that** the pore structure is configured as a fine pore structure.

5. The method according to one of the preceding claims, **characterized in that** a pigmenting substance and/or a pigment having an arbitrary colour, or each having an arbitrary colour, particularly a transparent colour, is used.

6. The method according to one of the preceding claims, **characterized in that** a compression of the comb or pore structure, particularly by hydrating, takes place before applying the sol-gel coating,

7. A component made of aluminium or comprising aluminium produced by the method according to one or several of the preceding claims.

## Revendications

1. Procédé de traitement de la surface de composants en aluminium ou de composants présentant de l'aluminium, comprenant les étapes suivantes :
- anodisation de la surface,
- introduction d'au moins une substance de pigmentation, notamment une substance de pigmentation complète, dans des creux ou pores ouverts vers la surface d'une structure de peigne ou poreuse résultant de l'anodisation de la surface, et/ou
- introduction de substances oxydables dans des creux ou pores ouverts vers la surface d'une structure de peigne ou poreuse résultant de l'anodisation de la surface et oxydation de ces substances,
- application d'un revêtement sol-gel silicateux sur la surface, dans lequel le revêtement sol-gel présente un pigment servant notamment à la réfraction.

2. Procédé selon la revendication 1, **caractérisé en ce que** le revêtement sol-gel est appliqué avec une épaisseur de couche de 0,5 µm à 5 µm.

3. Procédé selon l'une quelconque des revendications précédentes, **caractérisé en ce qu'**un pigment inorganique est utilisé pour le pigment présent dans le revêtement sol-gel.

4. Procédé selon l'une quelconque des revendications précédentes, **caractérisé en ce que** la structure poreuse est réalisée en tant que structure finement poreuse.

5. Procédé selon l'une quelconque des revendications précédentes, **caractérisé en ce qu'**une substance de pigmentation et/ou un pigment de couleur quelconque ou respectivement de couleur quelconque, notamment de couleur transparente, est utilisé(e).

6. Procédé selon l'une quelconque des revendications précédentes, **caractérisé en ce qu'**une condensation, notamment par hydratation, de la structure de peigne ou poreuse a lieu avant l'application du revêtement sol-gel.

7. Composant en aluminium ou présentant de l'aluminium fabriqué selon le procédé selon l'une quelconque ou plusieurs des revendications précédentes.
